# FASCICULE DE BREVET EUROPEEN

(11) **EP 2 671 281 B1**
(45) Date de publication et mention de la délivrance du brevet: **14.09.2016**
(21) Numéro de dépôt: 12707844.2
(22) Date de dépôt: 01.02.2012
(51) Int. Cl.: H01M 8/04007, H01M 8/04223

(54) **SYSTÈME DE REFROIDISSEMENT POUR PILE À COMBUSTIBLE**
KÜHLSYSTEM FÜR EINE BRENNSTOFFZELLE
COOLING SYSTEM FOR A FUEL CELL

(30) Priorité: 02.02.2011 FR 1150826
(43) Date de publication de la demande: 11.12.2013
(73) Titulaire: Peugeot Citroën Automobiles SA, 78140 Vélizy Villacoublay (FR); Commissariat à l'Énergie Atomique et aux Énergies Alternatives, 75015 Paris (FR)
(72) Inventeur: GLIPA, Xavier, F-78480 Verneuil Sur Seine (FR); JONCQUET, Guillaume, F-78170 La Celle Saint Cloud (FR); PINTON, Eric, F-38130 Echirolles (FR); LE GALLO, Patrick, F-38160 Saint Apolinard (FR); BEGOT, Sylvie, F-90330 Chaux (FR); HAREL, Fabien, F-90200 Giromagny (FR); LE CANUT, Jean-Marc, F-90000 Belfort (FR)
(74) Mandataire: Ménès, Catherine
(86) Numéro de dépôt international: PCT/FR2012/050222
(87) Numéro de publication internationale: WO 2012/104554

(56) Documents cités:
- JP-A- 2005 322 596
- JP-A- 2009 245 802
- US-A1- 2005 175 875
- US-A1- 2005 271 908

## Description

La présente invention concerne un système de refroidissement d'une pile à combustible génératrice d'électricité, elle concerne aussi un procédé de fonctionnement d'un tel système de refroidissement, ainsi qu'un groupe électrogène et un véhicule automobile comprenant une pile à combustible équipée de ce système de refroidissement.

Les piles à combustible sont développées aujourd'hui en particulier pour équiper des véhicules en remplacement des moteurs thermiques, elles permettent en produisant de l'électricité utilisée par une machine électrique de traction, d'obtenir un meilleur rendement énergétique que celui des moteurs thermiques.

Les piles à combustible comportent généralement un empilement de cellules élémentaires comprenant deux électrodes séparées par un électrolyte, et deux plaques conductrices qui apportent le carburant et le comburant aux électrodes par des canaux internes. Les réactions électrochimiques qui se réalisent au contact des électrodes, génèrent un courant électrique et produisent de l'eau, tout en dégageant une énergie calorifique qui échauffe les différents composants.

Pour fonctionner correctement, les piles à combustible doivent se trouver à une certaine température comprise suivant le type entre 60 et 800°C. La chaleur dégagée par le démarrage des réactions quand la pile est froide, sert d'abord à échauffer les cellules pour les amener à la température de fonctionnement souhaitée.

Pour réguler la température des cellules, les piles à combustible comportent un système de refroidissement comprenant un circuit de fluide caloporteur mis en circulation par une pompe, qui vient au contact de ces cellules pour prélever des calories en se réchauffant. Le fluide circule ensuite dans un échangeur thermique pour se refroidir, notamment par échange avec l'air ambiant.

Un problème qui se pose dans le cas d'un démarrage de la pile à combustible se trouvant à une température basse inférieure à 0°C, est que l'eau produite par la réaction électrochimique risque de geler tant que cette température se trouve en dessous de ce seuil de 0°C.

La pile à combustible ne peut alors plus fonctionner correctement, et risque d'être détruite. Pour remédier à ce problème, un système de refroidissement connu, présenté notamment dans le document EP-A1-0074701, comporte un circuit de refroidissement comprenant une première boucle de circulation disposant d'un échangeur thermique et d'une pompe débitant toujours dans la même direction, et une deuxième boucle de circulation qui traverse les cellules.

Les deux boucles de circulation se recoupent en un point unique, au niveau d'une vanne à quatre voies qui peut être mise dans deux positions. Deux des quatre voies servent toujours l'une d'entrée et l'autre de sortie pour la première boucle de circulation, et les deux autres voies permettent de disposer cette deuxième boucle en série avec la première boucle, pour recevoir une circulation dans un sens pour une position de la vanne, et dans l'autre sens pour l'autre position.

Avec la pompe débitant dans la première boucle de manière continue dans une même direction, un actionnement automatique de la vanne quatre voies d'une position à l'autre, permet d'alterner le sens de passage du fluide caloporteur dans la deuxième boucle, et donc dans les cellules.

On réalise ainsi à froid par une alternance fréquente du sens de circulation du fluide dans les cellules, une circulation d'un même volume réduit de fluide traversant ces cellules dans un sens puis dans l'autre. En fonction du débit de fluide et de la fréquence d'alternance, le même volume de fluide sort d'un côté des cellules, pour y rentrer à nouveau après le changement de sens de circulation. Les changements de sens de circulation du fluide se produisent avec des intervalles de temps entre deux sens de circulation, qui sont assez courts pour ne pas laisser chaque partie de la pile à combustible atteindre son point de stabilité thermique.

La mise en oeuvre d'un faible volume de fluide comportant un mouvement alterné, qui échange et répartit des calories, permet d'obtenir une meilleure homogénéisation de la température en tous points des cellules, et entre les cellules situées au centre de l'empilage et celles des extrémités, par rapport à une homogénéisation obtenue avec un mouvement de fluide dans un seul sens. On obtient ainsi une concentration de la chaleur qui reste dans les cellules et dans les parties des canalisations proches de ces cellules, le fluide ne circulant pas au delà de ces parties proches.

On peut obtenir ainsi un démarrage et une montée en température plus rapide de la pile à combustible, avant d'avoir à dissiper des calories vers l'extérieur par le mode de fonctionnement continu comprenant un sens unique de passage, dans lequel le fluide traverse les cellules et passe dans l'échangeur thermique pour se refroidir.

Un problème qui se pose avec ce circuit de refroidissement, est qu'il faut alors dimensionner la pompe avec une puissance plus élevée, pour mettre en mouvement le fluide caloporteur de manière alternée dans la boucle secondaire. On notera que l'énergie nécessaire pour cette mise en mouvement du fluide caloporteur est d'autant plus importante que ce fluide comprenant un antigel comme un éthylène-glycol ou une huile fluorée, est plus visqueux.

La pompe comporte alors un encombrement, une masse et un coût plus importants.

Un autre problème posé par ce circuit de refroidissement, concerne la vanne à quatre voies qui est relativement complexe et couteuse à réaliser. De plus, les deux boucles se recoupant en un point unique, forment un circuit spécifique qui n'est pas toujours facile à réaliser simplement à partir d'un circuit conventionnel comprenant une seule boucle principale.

Par ailleurs la façon de régler la fréquence du changement de sens du fluide, est basée sur des caractéristiques globales de la pile, alors que dans le démarrage à basse température, il peut y avoir des différences de température importantes à l'intérieur de cette pile. Un bon choix de la valeur de fréquence est donc très difficile à réaliser.

Les documents US2005/175875 et US2005/271908 décrivent des systèmes de refroidissement comportant deux circuits de fluide caloporteur reliés en parallèle, chaque circuit étant pourvu d'une pompe. Les documents JP2005322596 et JP2009245802 décrivent des systèmes de refroidissement comportant une pompe réalisant une circulation alternée du fluide caloporteur.

La présente invention a notamment pour but d'éviter ces inconvénients de la technique antérieure, et de proposer un circuit de refroidissement simple et efficace, permettant un démarrage rapide de la pile à combustible aux basses températures.

Elle propose à cet effet un système de refroidissement pour pile à combustible selon la revendication 1, comprenant un circuit principal de fluide caloporteur comportant une pompe de circulation principale et un échangeur thermique avec l'extérieur, qui alimentent une canalisation amont délivrant ce fluide aux cellules de la pile à combustible, le fluide ressortant des cellules par une canalisation aval pour revenir vers cette pompe principale, caractérisé en ce qu'un circuit secondaire comportant un dispositif de circulation secondaire réalisant une circulation alternée du fluide, est connecté en parallèle avec le circuit principal sur les canalisations amont et aval, et en ce qu'une ou plusieurs vannes pilotées permettent d'établir un fonctionnement indépendant du circuit principal ou du circuit secondaire.

Un avantage de ce système de refroidissement, est que le circuit secondaire peut être dédié pour la circulation alternée, avec le dispositif de circulation secondaire prévu de manière spécifique pour cette circulation alternée, la pompe principale étant réalisée de manière conventionnelle pour une circulation dans un seul sens.

Le système de refroidissement selon l'invention peut en outre comporter une ou plusieurs des caractéristiques suivantes, qui peuvent être combinées entre elles.

Selon un mode de réalisation, les vannes pilotées comprennent une unique vanne trois voies disposée sur une canalisation amont ou aval des cellules, pour diriger le fluide vers le circuit principal ou le circuit secondaire.

Selon un autre mode de réalisation, les vannes pilotées comprennent deux vannes trois voies disposées sur chacune des canalisations amont et aval des cellules, pour diriger le fluide vers le circuit principal ou le circuit secondaire.

Selon un autre mode de réalisation, les vannes pilotées comprennent sur chaque canalisation amont ou aval, une vanne deux voies disposée vers le circuit principal, et une vanne deux voies disposée vers le circuit secondaire.

Le dispositif de circulation secondaire est une pompe comportant un cylindre disposé en série dans la canalisation, comprenant un piston délimitant deux chambres, animé d'un mouvement alternatif pour déplacer le fluide caloporteur du circuit secondaire avec un mouvement alterné.

Avantageusement, des mélangeurs statiques sont disposés dans le circuit de fluide, à proximité des cellules.

L'invention comporte aussi un procédé de fonctionnement d'un système de refroidissement comprenant l'une quelconque des caractéristiques précédentes, commandant en fonction de l'évolution de la température des cellules, la fréquence des alternances de commutation des vannes pilotées, pour établir alternativement le circuit principal ou le circuit secondaire.

Avantageusement, la fréquence d'alternance est calculée, pour une intensité donnée de courant délivré par des cellules, en fonction de l'évolution de la tension aux bornes de ces cellules.

Avantageusement, deux tensions sont mesurées aux bornes de deux groupes de cellules, un groupe se trouvant dans une zone centrale et l'autre groupe dans des zones d'extrémité de l'empilage des cellules, le procédé de fonctionnement pouvant commuter les vannes pilotées pour établir le circuit principal avec le mode de fonctionnement continu, quand la tension des cellules centrales est dépassée par la tension des cellules d'extrémité.

L'invention a aussi pour objet un groupe électrogène disposant d'une pile à combustible comprenant un système de refroidissement comportant l'une quelconque des caractéristiques précédentes.

L'invention a de plus pour objet un véhicule électrique disposant d'une pile à combustible délivrant un courant électrique utilisé pour la traction, cette pile comprenant un système de refroidissement comportant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma d'un système de refroidissement pour une pile à combustible, selon l'invention ;
- la figure 2 est un graphique montrant les évolutions de la tension électrique V aux bornes des cellules de cette pile à combustible, en fonction du temps t, lors d'une régulation par une circulation alternée du fluide ; et
- les figures 3 à 5 sont des schémas de systèmes de refroidissement selon des variantes.

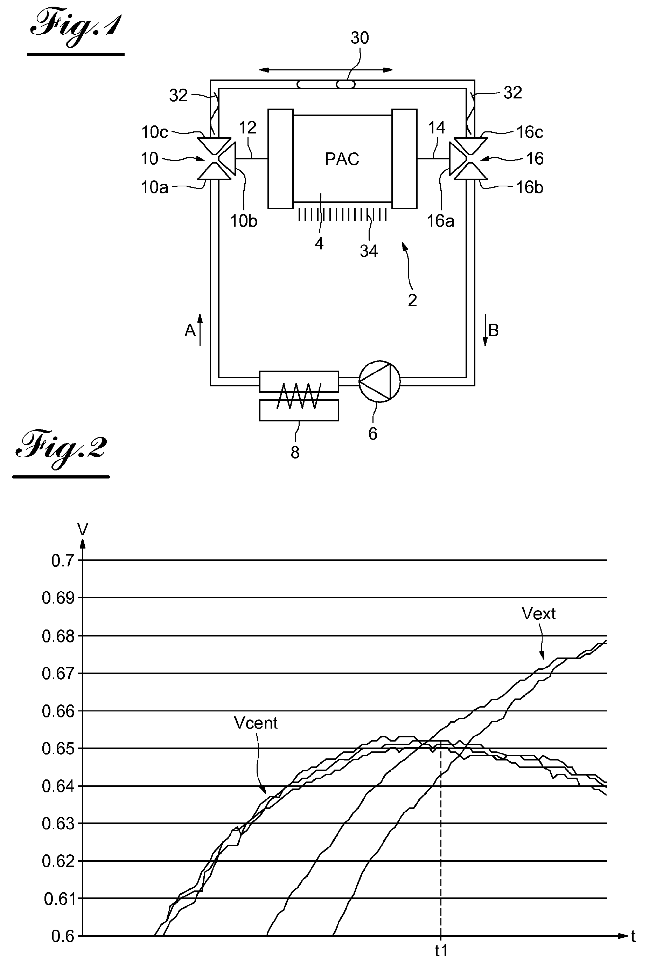

La figure 1 présente une pile à combustible 2 comprenant une série de cellules 4 traversées par un fluide caloporteur d'un système de refroidissement, géré par un calculateur non représenté contrôlant le système de refroidissement, qui peut être le calculateur de gestion de l'ensemble de la pile à combustible.

Les cellules 4 comportent, réparties en différents endroits de l'empilage, des connexions électriques de mesure 34 de la tension de ces cellules, permettant au calculateur de gestion de faire un suivi de cette tension au cours du temps.

Le système de refroidissement comporte dans un circuit principal, une pompe 6 comprenant un unique sens de rotation, qui génère un débit de fluide caloporteur traversant un échangeur thermique 8, pour refroidir ce fluide par échange des calories avec l'air ambiant.

Dans un mode de fonctionnement continu du système de refroidissement, le fluide caloporteur mis en circulation par la pompe 6, parcourt le circuit principal dont le début est indiqué par la flèche A, et traverse une vanne trois voies amont 10 en entrant par la voie d'entrée 10a, pour sortir par la voie de sortie 10b qui est reliée à la canalisation amont 12 des cellules 4 de la pile à combustible.

Le fluide caloporteur ressort ensuite des cellules 4 par une canalisation aval 14, et traverse une vanne trois voies aval 16 en entrant par la voie d'entrée 16a, pour sortir par la voie de sortie 16b qui conduit ce fluide vers la fin du circuit principal indiqué par la flèche B, pour revenir vers la pompe 6.

On obtient ainsi un circuit principal comprenant un sens de circulation unique, qui permet dans un mode de fonctionnement continu de prélever des calories dans les cellules 4 pour les évacuer dans l'échangeur thermique 8.

Un circuit secondaire disposé en parallèle du circuit principal, comporte un dispositif de circulation du fluide secondaire, constitué par une pompe secondaire à mouvement alternatif 30, qui comprend un cylindre disposé en série dans la canalisation. Le cylindre comporte un piston délimitant deux chambres disposées de part et d'autre, qui est animé d'un mouvement alternatif pour déplacer le fluide caloporteur de ce circuit secondaire avec un mouvement alterné.

La pompe secondaire à mouvement alternatif 30, comporte un moteur linéaire tubulaire à courant continu, qui peut être synchrone ou asynchrone. Le piston peut aussi comporter un aimant mis en mouvement par une bobine électromagnétique recevant un courant alternatif.

En variante, le piston de la pompe secondaire 30 peut être entraîné par un système bielle-manivelle mis en mouvement par un moteur tournant de manière continue.

Les extrémités de la pompe secondaire 30 sont reliées chacune sur la troisième voie disponible 10c, 16c de chaque vanne trois voies 10, 16, de manière à ce que ces deux vannes étant commutées, le circuit principal est interrompu, et le circuit secondaire forme une boucle fermée raccordée aux canalisations amont 12 et aval 14 des cellules 4.

Avantageusement, les vannes trois voies 10, 16 sont disposées près des cellules 4, et le circuit secondaire comporte un volume de fluide caloporteur réduit pour faciliter sa montée en température, et limiter la puissance nécessaire pour mettre en mouvement ce fluide à forte viscosité.

On notera que les vannes trois voies 10, 16 sont des vannes commandées simultanément en tout ou rien, qui nécessitent un pilotage simple et économique.

En cas de démarrage de la pile à combustible à des températures inférieures à 0°C, et pour accélérer la montée en température des cellules afin d'éviter un gel de l'eau produite par la réaction électrochimique, le calculateur de contrôle du circuit de refroidissement commute les deux vannes trois voies 10, 16 pour fermer le circuit principal et établir le circuit secondaire, et actionne la pompe secondaire 30 pour faire osciller le fluide caloporteur de ce circuit secondaire suivant des petites périodes successives.

On obtient ainsi avec un minimum de modifications d'un circuit principal conventionnel, en ajoutant deux vannes trois voies 10, 16 simples et économiques, et une pompe à mouvement alternatif 30, un circuit secondaire permettant de faire circuler dans les cellules 4 le fluide caloporteur dans un mode de fonctionnement alterné.

La circulation alternée d'un même volume de fluide dans les cellules 4, permet de concentrer dans une faible masse les calories dégagées par la réaction électrochimique, pour limiter les déperditions et obtenir une montée en température plus rapide, tout en répartissant la chaleur dans tout le volume de ces cellules afin d'homogénéiser la température et d'éviter à la fois les points chauds et les points froids.

On comprend que lorsque qu'on augmente la fréquence d'alternance, le volume de fluide qui traverse les cellules diminue.

De plus, le circuit secondaire comporte dans les canalisations, des mélangeurs statiques 32 situés à proximité des vannes trois voies 10, 16, qui forment des tourbillons dans ces canalisations et aident au mélange du fluide caloporteur sortant et entrant dans les cellules 4, qui peut comporter des veines plus chaudes et d'autres plus froides.

Les mélangeurs statiques 32 sont des pièces mécaniques pouvant comporter différentes formes, comme des barres hélicoïdales, des treillis ou des disques percés, qui séparent le débit de fluide en plusieurs veines.

On notera que le dispositif de circulation secondaire 30 à piston, constitue un moyen simple et économique pour mettre en mouvement de manière oscillante le fluide caloporteur comportant une forte viscosité.

En complément pour réaliser le contrôle, le système de refroidissement peut comporter un capteur de température disposé d'un côté des cellules 4 sur la canalisation amont 12 ou aval 14, ou deux capteurs disposés chacun d'un côté de ces cellules.

La figure 2 illustre une méthode de régulation de la température des cellules 4, en effectuant pour des cellules débitant une intensité du courant donnée, un suivi du niveau de tension V présenté sur l'axe des ordonnées, en fonction du temps t présenté sur l'axe des abscisses, mesuré par les connexions de mesure 34 d'une part sur un groupe de cellules d'une zone centrale Vcent, et d'autre part sur un groupe de cellules de zones d'extrémité Vext réparties avantageusement sur les deux extrémités de l'empilage de ces cellules.

Les tensions Vcent et Vext étant mesurées pour chaque groupe sur plusieurs cellules 4, et chaque cellule d'un groupe donnant des courbes proches formant un faisceau de courbes, le calculateur de gestion établit ensuite une moyenne pour chaque faisceau de courbes, afin d'établir la valeur moyenne de la température de chaque groupe.

Au démarrage de la pile à combustible et avant le temps t1, la tension Vcent est supérieure à la tension Vext, les cellules centrales s'échauffent plus vite par la réaction électrochimique, et doivent transmettre par la circulation du fluide caloporteur en mode de fonctionnement alterné, leur chaleur aux cellules d'extrémité pour homogénéiser la température de l'empilage de ces cellules.

Ensuite, quand la température de l'ensemble des cellules 4 monte, la circulation alternée du fluide caloporteur tend à chauffer plus les cellules d'extrémité que les cellules centrales.

Or une montée en température des cellules 4 jusqu'à un certain seuil active la réaction électrochimique, et leur tension V s'accroît, et au delà de ce seuil une montée supplémentaire de la température entraîne une déshydratation de l'électrolyte et une baisse de la tension V.

Au temps t1, on constate que les cellules centrales comportent une tension Vcent qui d'une part commence à décroître, et d'autre part est dépassée par la tension Vext des cellules d'extrémité. Il faut alors désactiver le mode de fonctionnement alterné et activer le mode de fonctionnement continu, en arrêtant la pompe secondaire de circulation alternée 30, en commutant les deux vannes trois voies 10, 16, et en démarrant la pompe principale de circulation continue 6.

On a alors une arrivée de fluide froid qui vient se mélanger à la part de fluide chaud du circuit secondaire contenue dans les cellules 4. On peut après une certaine baisse de la température des cellules 4, à nouveau commuter les vannes trois voies 10, 16 pour remettre en fonctionnement le circuit secondaire et remonter la température générale de son fluide.

On réalise ainsi de manière simple par la fréquence des commutations, une régulation de la température des cellules 4 qui permet d'optimiser la montée en température progressive de l'ensemble du système de refroidissement, ainsi que le point de fonctionnement de ces cellules.

A la fin, pour une température de fonctionnement nominale du système de refroidissement, comprise par exemple entre 20 et 80°C pour une pile à combustible à électrolyte solide polymère, et en particulier entre 60 et 80°C pour des applications véhicule, le circuit de refroidissement peut être maintenu de manière continue sur le circuit principal.

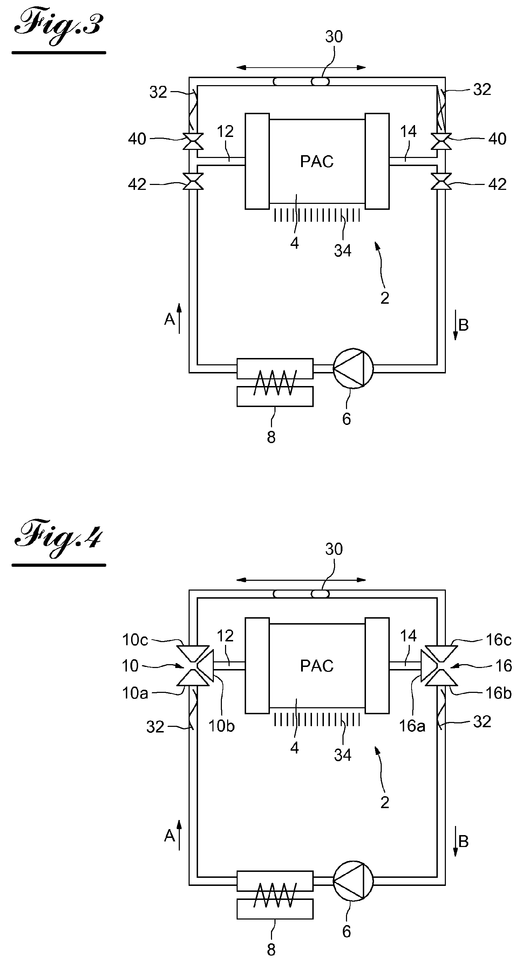

La figure 3 présente une variante de circuit de refroidissement dans laquelle de chaque côté des cellules 4, la vanne trois voies est remplacée par une vanne deux voies de circuit principal 42 et une vanne deux voies de circuit secondaire 40, qui sont disposées à proximité du raccordement de ces deux circuits.

Pour le mode de fonctionnement continu, les deux vannes du circuit secondaire 40 sont fermées et les deux vannes du circuit principal 42 sont ouvertes, de manière à établir uniquement ce circuit principal. Et pour le mode de fonctionnement alterné, les deux vannes du circuit principal 42 sont fermées et les deux vannes du circuit secondaire 40 sont ouvertes, de manière à établir uniquement ce circuit secondaire.

La figure 4 présente une variante du système de refroidissement présenté figure 1, dans laquelle les mélangeurs statiques 32 sont disposés dans le circuit principal, à proximité des vannes trois voies 10, 16.

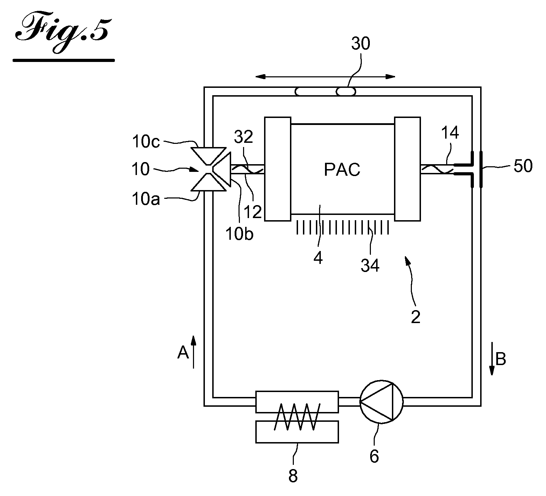

La figure 5 présente une variante du système de refroidissement présenté figure 4, dans laquelle les mélangeurs statiques 32 sont disposés directement en sortie des cellules 4, dans chaque canalisation amont 12 ou aval 14.

De plus, la vanne trois voies disposée sur la canalisation aval 14, est remplacée par un raccord à trois voies libres 50, qui relie de manière permanente les trois voies du circuit ensemble.

L'unique vanne trois voies 10 pilote alors à elle seule la circulation du fluide alternativement dans le circuit principal ou le circuit secondaire, du côté amont 12 des cellules 4, le raccord trois voies 50 refermant ce circuit du côté aval 14.

En variante, la vanne trois voies pourrait être disposée du côté aval 14, et le raccord trois voies libres 50 du côté amont 12.

La pile à combustible comprenant un système de refroidissement suivant l'invention, peut servir pour un véhicule automobile, afin de délivrer un courant électrique utilisé pour la traction du véhicule. Elle peut aussi servir pour toutes applications stationnaires, en particulier pour réaliser des groupes électrogènes pour lesquelles on recherche une montée en température rapide.

## Revendications

1. Système de refroidissement pour pile à combustible (2), comprenant un circuit principal de fluide caloporteur comportant une pompe de circulation principale (6), un échangeur thermique avec l'extérieur (8), une canalisation amont (12) délivrant ce fluide aux cellules (4) de la pile à combustible, et une canalisation aval (14) tell que le fluide ressorte des cellules par ladite canalisation aval (14) pour revenir vers cette pompe principale, **caractérisé en ce qu'**un circuit secondaire comportant un dispositif de circulation secondaire (30) réalisant une circulation alternée du fluide, est connecté en parallèle avec le circuit principal sur les canalisations amont (12) et aval (14), et **en ce qu'**une ou plusieurs vannes pilotées (10, 16, 40, 42) permettent d'établir un fonctionnement indépendant du circuit principal ou du circuit secondaire, et **en ce que** le dispositif de circulation secondaire est une pompe comportant un cylindre disposé en série dans la canalisation, comprenant un piston délimitant deux chambres, animé d'un mouvement alternatif pour déplacer le fluide caloporteur du circuit secondaire avec un mouvement alterné.

2. Système de refroidissement suivant la revendication 1, **caractérisé en ce que** les vannes pilotées comprennent une unique vanne trois voies (10) disposée sur une canalisation amont (12) ou aval (14) des cellules (4), pour diriger le fluide vers le circuit principal ou le circuit secondaire.

3. Système de refroidissement suivant la revendication 1, **caractérisé en ce que** les vannes pilotées comprennent deux vannes trois voies (10, 16) disposées sur chacune des canalisations amont (12) et aval (14) des cellules (4), pour diriger le fluide vers le circuit principal ou le circuit secondaire.

4. Système de refroidissement suivant la revendication 1, **caractérisé en ce que** les vannes pilotées comprennent sur chaque canalisation amont (12) ou aval (14), une vanne deux voies (42) disposée vers le circuit principal, et une vanne deux voies (40) disposée vers le circuit secondaire (40).

5. Système de refroidissement suivant l'une quelconque des revendications précédentes, **caractérisé en ce que** des mélangeurs statiques (32) sont disposés dans le circuit de fluide, à proximité des cellules (4).

6. Procédé de fonctionnement d'un système de refroidissement suivant l'une quelconque des revendications précédentes, **caractérisé en ce qu'**il commande en fonction de l'évolution de la température des cellules (4), la fréquence (F) des alternances de commutation des vannes pilotées (10, 16, 40, 42), pour établir alternativement le circuit principal ou le circuit secondaire.

7. Procédé de fonctionnement suivant la revendication précédente, **caractérisé en ce que** la fréquence d'alternance (F) est calculée, pour une intensité donnée de courant délivré par des cellules (4), en fonction de l'évolution de la tension (V) aux bornes de ces cellules.

8. Procédé de fonctionnement suivant la revendication précédente, **caractérisé en ce que** deux tensions (Vext, Vcent) sont mesurées aux bornes de deux groupes de cellules (4), un groupe se trouvant dans une zone centrale et l'autre groupe dans des zones d'extrémité de l'empilage des cellules, le procédé pouvant commuter les vannes pilotées (10, 16, 40, 42) pour établir le circuit principal avec le mode de fonctionnement continu, quand la tension des cellules centrales (Vcent) est dépassée par la tension des cellules d'extrémité (Vext).

9. Groupe électrogène disposant d'une pile à combustible comprenant un système de refroidissement, **caractérisée en ce que** ce système de refroidissement est réalisé suivant l'une quelconque des revendications 1 à 5.

10. Véhicule électrique comprenant une pile à combustible délivrant un courant électrique utilisé pour la traction, **caractérisé en ce que** cette pile à combustible comporte un système de refroidissement réalisé suivant l'une quelconque des revendications 1 à 5.

## Patentansprüche

1. Kühlsystem für Brennstoffzelle (2), das ein Wärmeträgerfluid umfasst, das eine Hauptumwälzpumpe (6), einen Wärmeaustauscher mit dem Äußeren (8), eine stromaufwärtige Kanalisation (12), die dieses Fluid zu den Zellen (4) der Brennstoffzelle liefert, und eine stromabwärtige Kanalisation (14) derart umfasst, dass das Fluid aus den Zellen durch die stromabwärtige Kanalisation (14) austritt, um zu dieser Hauptpumpe zurückzukehren, **dadurch gekennzeichnet, dass** ein Sekundärkreislauf, der eine Sekundärzirkulationsvorrichtung (30) umfasst, die eine abwechselnde Zirkulation des Fluids ausführt, zu dem Hauptkreislauf parallel auf der stromaufwärtigen (12) und stromabwärtigen (14) Kanalisation angeschlossen ist, und dass ein oder mehrere Ventile (10, 16, 40, 42) es erlauben, einen unabhängigen Betrieb des Hauptkreislaufs oder des Sekundärkreislaufs einzurichten, und dass die Sekundärzirkulationsvorrichtung eine Pumpe ist, die einen Zylinder umfasst, der in Serie in der Kanalisation angeordnet ist, der einen Kolben umfasst, der zwei Kammern abgrenzt, bewegt durch eine Wechselbewegung, um das Wärmeträgerfluid von dem Sekundärkreislauf mit einer Wechselbewegung zu verlagern.

2. Kühlsystem nach Anspruch 1, **dadurch gekennzeichnet, dass** die gesteuerten Ventile ein einziges Dreiwegeventil (10) umfassen, das auf einer stromaufwärtigen (12) oder stromabwärtigen (14) Kanalisation der Zellen (4) angeordnet ist, um das Fluid zu dem Hauptkreislauf oder dem Nebenkreislauf zu lenken.

3. Kühlsystem nach Anspruch 1, **dadurch gekennzeichnet, dass** die gesteuerten Ventile zwei Dreiwegeventile (10, 16) umfassen, die auf jeder der stromabwärtigen (12) und stromaufwärtigen (14) Kanalisation der Zellen (4) angeordnet sind, um das Fluid zu dem Hauptkreislauf oder dem Nebenkreislauf zu lenken.

4. Kühlsystem nach Anspruch 1, **dadurch gekennzeichnet, dass** die gesteuerten Ventile auf jeder stromaufwärtigen (12) oder stromabwärtigen (14) Kanalisation einen Zweiwegeschieber (42), der zu dem Hauptkreislauf angeordnet ist, und ein Zweiwegeventil (40), das zu dem Sekundärkreislauf (40) angeordnet ist, umfassen.

5. Kühlsystem nach einem der vorhergehenden Ansprüche, **dadurch gekennzeichnet, dass** statische Mischer (32) in dem Fluidkreislauf in der Nähe der Zellen (4) angeordnet sind.

6. Betriebsverfahren eines Kühlsystems nach einem der vorhergehenden Ansprüche, **dadurch gekennzeichnet, dass** es in Abhängigkeit von der Entwicklung der Temperatur der Zellen (4) die Frequenz (F) der Umschaltwechsel der gesteuerten Ventile (10, 16, 40, 42) steuert, um abwechselnd den Hauptkreislauf oder die Nebenkreislauf einzurichten.

7. Betriebsverfahren nach dem vorhergehenden Anspruch, **dadurch gekennzeichnet, dass** die Wechselfrequenz (F) für eine gegebene Stromstärke, die von Zellen (4) geliefert wird, in Abhängigkeit von der Entwicklung der Spannung (V) an den Klemmen dieser Zellen berechnet wird.

8. Betriebsverfahren nach dem vorhergehenden Anspruch, **dadurch gekennzeichnet, dass** zwei Spannungen (Vext, Vcent) an den Klemmen von zwei Gruppen von Zellen (4) gemessen werden, wobei sich eine Gruppe in einem zentralen Bereich und die andere Gruppe in Endbereichen der Stapelung der Zellen befindet, wobei das Verfahren die gesteuerten Ventile (10, 16, 40, 42) umschalten kann, um den Hauptkreislauf mit dem kontinuierlichen Betriebsmodus einzurichten, wenn die Spannung der zentralen Zellen (Vcent) von der Spannung der Endzellen (Vext) überschritten wird.

9. Generatormaschinensatz, der über eine Brennstoffzelle verfügt, die ein Kühlsystem umfasst, **dadurch gekennzeichnet, dass** das Kühlsystem gemäß einem der Ansprüche 1 bis 5 hergestellt ist.

10. Elektrofahrzeug, das eine Brennstoffzelle umfasst, die einen Strom liefert, der für den Antrieb verwendet wird, **dadurch gekennzeichnet, dass** diese Brennstoffzelle ein Kühlsystem, das nach einem der Ansprüche 1 bis 5 hergestellt ist, umfasst.

## Claims

1. A cooling system for a fuel cell (2), including a main circuit for heat transfer fluid comprising a main circulation pump (6), a heat exchanger with the exterior (8), an upstream conduit (12) delivering this fluid to the cells (4) of the fuel cell, and a downstream conduit (14) such that the fluid exits from the cells by said downstream conduit (14) to return toward this main pump, **characterized in that** a secondary circuit comprising a secondary circulation device (30) bringing about an alternated circulation of the fluid is connected in parallel with the main circuit on the upstream (12) and downstream (14) conduits, and **in that** one or more driven valves (10, 16, 40, 42) permit an independent operation of the main circuit or of the secondary circuit to be established, and **in that** the secondary circulation device is a pump comprising a cylinder disposed in series in the conduit, including a piston delimiting two chambers, activated by an alternating movement in order to displace the heat transfer fluid of the secondary circuit with an alternated movement.

2. The cooling system according to claim 1, **characterized in that** the driven valves include a single three-way valve (10) disposed on an upstream (12) or downstream (14) conduit of the cells (4), in order to direct the fluid toward the main circuit or the secondary circuit.

3. The cooling system according to claim 1, **characterized in that** the driven valves include two three-way valves (10, 16) disposed on each of the upstream (12) and downstream (14) conduits of the cells (4), in order to direct the fluid toward the main circuit or the secondary circuit.

4. The cooling system according to claim 1, **characterized in that** the driven valves include on each upstream (12) or downstream (14) conduit a two-way valve (42) disposed toward the main circuit, and a two-way valve (40) disposed toward the secondary circuit (40).

5. The cooling system according to any one of the preceding claims, **characterized in that** static mixers (32) are disposed in the fluid circuit, close to the cells (4).

6. An operating method of a cooling system according to any one of the preceding claims, **characterized in that** it controls as a function of the development of the temperature of the cells (4), the frequency (F) of switching alternations of the driven valves (10, 16, 40, 42), in order to establish alternatively the main circuit or the secondary circuit.

7. The operating method according to the preceding claim, **characterized in that** the frequency of alternation (F) is calculated, for a given current intensity delivered by cells (4), as a function of the development of the voltage (V) at the terminals of these cells.

8. The operating method according to the preceding claim, **characterized in that** two voltages (Vext, Vcent) are measured at the terminals of two groups of cells (4), one group being situated in a central zone and the other group in end zones of the stack of cells, the method being able to switch the driven valves (10, 16, 40, 42) in order to establish the main circuit with the continuous operation mode, when the voltage of the central cells (Vcent) is exceeded by the voltage of the end cells (Vext).

9. An electricity-generating group having a fuel cell including a cooling system, **characterized in that** this cooling system is realized according to any one of claims 1 to 5.

10. An electric vehicle including a fuel cell delivering an electric current used for traction, **characterized in that** this fuel cell comprises a cooling system realized according to any one of claims 1 to 5.
